# EUROPEAN PATENT APPLICATION

(11) **EP 3 001 685 A1**
(43) Date of publication of application: **30.03.2016**
(21) Application number: 14306465.7
(22) Date of filing: 24.09.2014
(51) Int. Cl.: H04N 19/513, H04N 19/53, H04N 19/59

(54) **Method and apparatus for estimating absolute motion values in image sequences**

(71) Applicant: Thomson Licensing, 92130 Issy-les-Moulineaux (FR)
(72) Inventor: Theis, Oliver, 32689 Kalletal (DE)
(74) Representative: Rittner, Karsten

(57) **Abstract**

Absolute motion values between two frames of a sequence of successive image frames are estimated based on a determination (101) of a plurality of pyramid levels of Gaussian pyramid representations of the two frames. The Gaussian pyramid representations of the two frames are pyramid level-wise compared (102) to generate arrays of pixel-by-pixel distance measures between corresponding pyramid levels. Arrays of motion values from the distance measures are pyramid level-wise determined (103), weighted by level values assigned to the corresponding pyramid levels. Then, recursively from top to bottom pyramid levels, weighted motion values of corresponding motion arrays are transferred (104) to the motion array corresponding to a next lower pyramid level if they exceed the corresponding weighted motion values of said next lower pyramid level.

## Description

### FIELD

A method and an apparatus for estimating absolute motion values in image sequences are presented. In particular, the present disclosure relates to a method and an apparatus for estimating absolute motion values between two frames of a sequence of successive image frames, and to a corresponding computer readable storage medium.

### BACKGROUND

Motion estimation is a key task in the field of digital image sequence processing for film or video applications, e.g. for video compression, analysis, enhancement, restoration etc. Motion is caused, for example, by objects moving in relation to the camera and/or the camera moving in relation to a scene and its objects. In most cases motion of objects (local) and camera motion (global) can be expressed in terms of translation and rotation or a combination of both, which may in turn result in occlusion and/or uncovering of background and/or objects or of parts thereof. Sometimes motion is also caused by objects changing their shapes, such as a waving flag or an exploding bomb. Further, motion may easily be confused with technical effects like camera zoom or warping, jittering or flickering of scanned film.

In order to achieve better compression and analysis results etc., motion compensation is applied as a preprocessing step to many image processing algorithms, particularly for compensation of translatory motion. For this, a 2-D vector field is determined, containing vectors which describe the displacement of each pixel from a current frame to the preceding frame or the succeeding frame. This step is known as motion estimation and is widely used, for example, in the fields of video compression, computer vision and robotics. It also plays an important role within the digital film restoration domain, where motion compensation is used, for example, for dirt detection and/or flicker estimation.

Excessive research has been done within the last decades on motion estimation algorithms and their efficient implementations. An overview of different methods can be obtained, for example, from F. Dufaux and F. Moscheni, "Motion estimation techniques for digital TV: A review and a new contribution," Proc. of IEEE, Vol. 83, No. 6, pp. 858- 876, June 1995.

Sometimes, Gaussian pyramids, i.e. image pyramids providing multiple copies of the same image at reduced resolutions, are generated for handling motion, as described, for example, in E.H. Adelson et al., "Pyramid methods in image processing", RCA Engineer, 29-6, Nov/Dec 1984, pp. 33-41.

Motion estimation algorithms for many applications determine at least a two-dimensional vector-field, as neither the absolute value of the vector, i.e. its norm, nor its direction, usually indicated by its phase, alone may provide enough information for performing efficient motion compensation.

However, for applications requiring information only about absolute motion values, the information may also be perceived from a 2-D motion vector field by computing a suitable norm, e.g. the Euclidian norm, but the available information of the vector phase is thrown away in that case. In other words, determination of a 2-D motion vector field to only derive absolute motion values from can be regarded as involving an inefficiently high amount of computation.

There remains a need for a method and an apparatus which exhibit a principle for robust and computationally efficient estimation of absolute motion values in image sequences.

### SUMMARY

A method and an apparatus for estimating absolute motion values between any two frames of a sequence of image frames are suggested, as well as a computer readable storage medium.

According to an aspect of the invention, a method for estimating absolute motion values between two frames of a sequence of successive image frames comprises
- determining a plurality of pyramid levels of Gaussian pyramid representations of the two frames;
- pyramid level-wise comparing the Gaussian pyramid representations of the two frames to generate arrays of pixel-by-pixel distance measures between corresponding pyramid levels;
- pyramid level-wise determining arrays of motion values from the distance measures, weighted by level values assigned to the corresponding pyramid levels; and
- recursively from top to bottom pyramid levels, transferring weighted motion values of the corresponding motion array to the motion array corresponding to a next lower pyramid level if they exceed the corresponding weighted motion values of said next lower pyramid level.

After the recursively conditional transferring of motion values to motion arrays of next lower levels, the motion array corresponding to the bottom level will contain a resulting estimated motion value for each pixel of the image.

Accordingly, an apparatus for estimating absolute motion values between two frames of a sequence of successive image frames comprises
- an input for receiving frames of the sequence of successive image frames;
- a pyramid determination unit configured to determine a plurality of pyramid levels of Gaussian pyramid representations of the two frames;
- a comparison unit configured to pyramid level-wise compare the Gaussian pyramid representations of the two frames to generate arrays of pixel-by-pixel distance measures between corresponding pyramid levels;
- a motion determination unit configured to pyramid level-wise determine motion values from the distance measures, weighted by level values assigned to the corresponding pyramid levels; and
- a transfer unit configured to, recursively from top to bottom pyramid levels, transfer weighted motion values of the corresponding motion array to the motion array corresponding to a next lower pyramid level if they exceed the corresponding weighted motion values of said next lower pyramid level.

Units comprised in the apparatus, such as the pyramid determination unit, the comparison unit, the motion determination unit and the transfer unit may, for example, be provided as separate devices, jointly as at least one device or logic circuitry, or functionality carried out by a microprocessor, microcontroller or other processing device, computer or other programmable apparatus.

According to an aspect of the invention, an apparatus for estimating absolute motion values between two frames of a sequence of successive image frames comprises
- a processing device and
- a memory device storing instructions that, when executed, cause the apparatus to perform the described method steps.

Further, a computer readable storage medium has stored therein instructions enabling estimation of absolute motion values between two frames of a sequence of successive image frames, which, when executed by a computer, cause the computer to:
- determine a plurality of pyramid levels of Gaussian pyramid representations of the two frames;
- pyramid level-wise compare the Gaussian pyramid representations of the two frames to generate arrays of pixel-by-pixel distance measures between corresponding pyramid levels;
- pyramid level-wise determine arrays of motion values from the distance measures, weighted by level values assigned to the corresponding pyramid levels; and
- recursively from top to bottom pyramid levels, transfer weighted motion values of the corresponding motion array to the motion array corresponding to a next lower pyramid level if they exceed the corresponding weighted motion values of said next lower pyramid level.

The computer readable storage medium tangibly embodies a program of instructions, which, when executed by a computer, cause the computer to perform the described method steps.

Here, Gaussian pyramids, i.e. image pyramids, are generated for handling motion, especially large ranges of motion. In general, reduced resolution representations of the original image frames can be generated using pyramid methods. A Gaussian pyramid consists of a sequence of pyramid levels, i.e. a sequence of copies of an original image in which both sample density and resolution are decreased at regular steps. The bottom or zero level of the pyramid is equal to the original image. It is low-pass-filtered and subsampled, i.e. downsampled or downscaled, for example by a factor of two, to obtain the next pyramid level, which is then filtered and subsampled in the same way to obtain the pyramid level succeeding the next pyramid level etc. The top level corresponds to the obtained most subsampled or downsampled pyramid level of the original image.

The sequence of successive image frames comprises frames occurring at a given frame rate, but the two frames being subject to motion estimation are neither restricted to a specific time period, respectively distance, between the frames within the sequence, nor restricted in their order of succession. The frames, therefore, may be any two of the frames of the sequence of successive image frames, neighboring each other or not and independently of which one precedes the other.

The term "weighted by level values assigned to the corresponding pyramid levels" refers to multiplication by a weight that depends on the pyramid level, wherein, for example, the top level has assigned the highest weight and the bottom level, which corresponds to the original image frame, has assigned the lowest weight. As an example, the bottom level has assigned a weight equal to 1.

A pyramid level-wise comparison of the Gaussian pyramid representations of the two frames refers to comparisons carried out level by level between the representations. In other words, for each of the corresponding pyramid levels of the Gaussian pyramid of a first and a second of the two frames distance measures are generated pixel-by-pixel, i.e. between all corresponding pixels of the frame representations at the corresponding pyramid level.

In an embodiment the term "exceeding" the weighted motion value corresponds to having a larger value than the corresponding motion value at the next lower level. In another embodiment, for example depending on the definition of the weighting factors, the term "exceeding" may refer to having a smaller value than the motion value at the next lower level.

The solution according to the aspects of the invention allows estimation of absolute motion values between two (not necessarily consecutive) frames through level-wise comparison of their Gaussian pyramid representations and recursive transfer of information from top to bottom pyramid level without gathering information about the motion direction.

The provided solution at least has the effect that absolute motion values can be determined at a pixel-by-pixel resolution, where motion detected in high pyramid levels, i.e. derived from low resolution images, and therefore corresponding to large displacement by fast motion, is treated as the dominant motion by transferring its values to the lower levels. Therefore, especially large motion is handled very efficiently. Further, the solution is computationally very efficient due to the absence of direction information computation. Furthermore, the solution can be considered symmetric in the sense that none of the frames has reference character, i.e. results remain the same regardless of the temporal direction between two frames.

In an embodiment the determining of a plurality of pyramid levels comprises receiving representations of the two frames at an original scale and recursively determining low-pass filtered downsampled pyramid levels of the two frames at corresponding successively reduced scales. Different low-pass filters may be used to determine the representations at reduced scales. The original frame is equal to the bottom pyramid level, and with each recursion a higher level at a reduced scale or resolution is generated.

As an example, the pyramid level-wise comparing comprises determining distance arrays comprising distance values corresponding to the pixel-by-pixel distance measures between the representations of the two frames at the corresponding scales. While a frame or image frame is an array or matrix of pixels at a defined original scale or resolution, the distance arrays are calculated for the original and the low-pass filtered downsampled frame representations, i.e. pyramid levels. Thereby, a "pyramid" of distance arrays is determined. In an embodiment the distance arrays replace in memory corresponding stored image representations, i.e. pyramid levels. In another embodiment distance arrays are stored in addition to the stored image representations.

Further as an example, the determining of arrays of motion values weighted by level values assigned to the corresponding pyramid levels may comprise
determining the motion arrays comprising the motion values by threshold filtering the distance values of the corresponding distance arrays and,
for at least some of the motion arrays, weighting the motion values of a motion array by a pyramid level value increasing with the amount of recursions used for determining the low-pass filtered downsampled pyramid level corresponding to the motion array. The threshold filtering may, for example, comprise setting all values below the threshold to "0", while all other values are set to "1". In this case, weighting the motion values by the pyramid level corresponds to replacing all values equal to "1" by their corresponding pyramid level value.

In one embodiment the same threshold is applied to the distance values of all pyramid levels. In another embodiment the threshold filtering comprises applying different thresholds to the distance values depending on the corresponding pyramid levels, for example depending on the content of the image or the image sequence.

The recursive transferring of the weighted motion values may, for example, comprise, for said at least some of the motion arrays, i.e. of the arrays of motion values, recursively with decreasing pyramid level value, upsampling the motion array corresponding to a current pyramid level and propagating a weighted motion value of said motion array to the motion array of a next lower pyramid level if said weighted motion value exceeds the corresponding weighted motion value at an identical position in the motion array corresponding to the next lower pyramid level. The upsampling can be carried out, for example, using a nearest neighbor method.

In an embodiment the determining of the pyramid levels of the Gaussian pyramid representations of the two frames comprises a downsampling by a factor of two between successive pyramid levels. In this context, the factor of downsampling is applied in horizontal direction and in vertical direction, leading to a reduction of pixels per pyramid level to a fourth. Other factors or differing factors for horizontal and vertical downsampling may be applied, for example to further increase computation speed.

As an example, the transferring of the weighted motion values to a motion array corresponding to a next lower level comprises an upsampling by a factor of two between successive arrays of the weighted motion values. The current motion array is upsampled to the size of the motion array of the next lower level to allow pixel-by-pixel, i.e. value by value, comparison of corresponding motion values of successive pyramid levels.

In one embodiment the solution further comprises determining, for at least the weighted motion values of the motion array corresponding to the bottom pyramid level, corresponding displacement values. The displacement values may, for example, be calculated by determining a value 2^{m}, where m represents the determined motion value, to easily derive the number of pixels of displacement from, if down- and upsampling were carried out using a factor of two.

In one embodiment the generating of pixel-by-pixel distance measures comprises calculating Euclidian distances between corresponding pixels of the Gaussian pyramid representations of the two frames at corresponding pyramid levels. Other distance metrics may be used instead.

In one embodiment, for motion arrays corresponding to at least some of the pyramid levels, a morphological filtering is applied to the motion values determined from the distance measures, before weighting the motion values by the corresponding pyramid level values. The morphological filtering may, for example, comprise dilation, closing and filling or combinations thereof. This may, e.g., increase correctness and robustness of the estimated absolute motion values.

In one embodiment a single scalar value is determined from the weighted motion values corresponding to the bottom pyramid level. This value characterizes the overall motion in the image frame in relation to the other image frame within the sequence of image frames, thereby allowing characterization of the image sequence by the overall motion changing along the image sequence.

For example, the single scalar value can be an average or mean value of the weighted motion values corresponding to the bottom pyramid level. Depending on the application of the value, other single scalar values can be determined, e.g. maximum values.

While not explicitly described, the present embodiments may be employed in any combination or sub-combination.

### BRIEF DESCRIPTION OF THE DRAWINGS

- Fig. 1: schematically illustrates a method for estimating absolute motion values between two frames of a sequence of successive image frames according to an embodiment of the invention;
- Fig. 2: schematically illustrates a method for estimating absolute motion values between two frames of a sequence of successive image frames according to another embodiment of the invention;
- Fig. 3: schematically illustrates an apparatus for estimating absolute motion values between two frames of a sequence of successive image frames according to an embodiment of the invention; and
- Fig. 4: schematically illustrates an apparatus for estimating absolute motion values between two frames of a sequence of successive image frames according to another embodiment of the invention.

### DETAILED DESCRIPTION OF EMBODIMENTS

For a better understanding, the invention will now be explained in more detail in the following description with reference to the drawings. It is understood that the invention is not limited to these exemplary embodiments and that specified features can also expediently be combined and/or modified without departing from the scope of the present invention as defined in the appended claims.

Motion estimation algorithms for single channel sequences of images *y(t)* often have 2-D vector field outputs ***v*** containing x-and y-axis displacements. In case that the vector field is dense, for every pixel a displacement vector is available and an array m of absolute motion values having the same size as *y(t)* can be computed using the Euclidian norm:
*m*= ∥**v**∥= (vₓ.² + v_{y}.²). ^{0.5}, where vₓ and v_{y} refer to components of a vector of the vector field ***v*** in an x- and in a y-direction, and where the notation using "." indicates that the operation is performed for each corresponding element of ***v***.

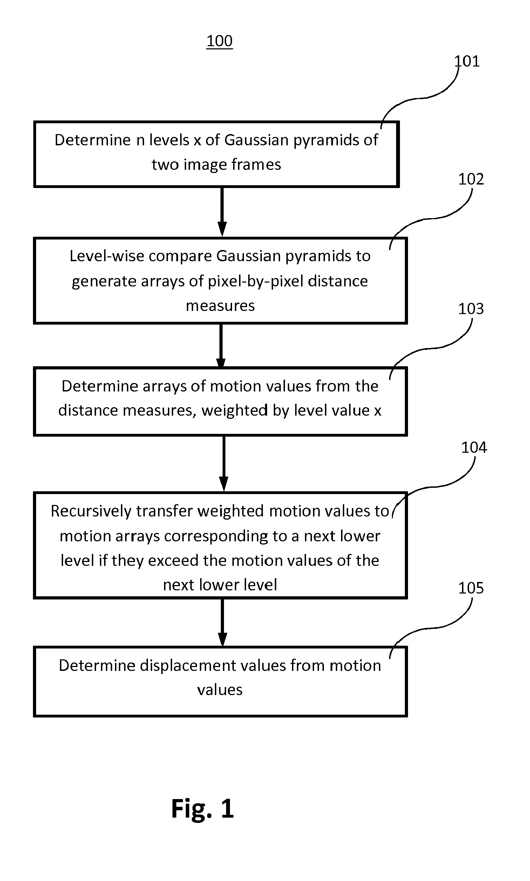

In contrast to that, a method 100 for estimating absolute motion values between two frames of a sequence of successive image frames according to an embodiment of the invention is schematically shown in Fig. 1. The method directly delivers an array or matrix of absolute motion values, i.e. a single scalar for every pixel of *y*(*t*) without computing a motion vector field ***v***. The method requires two image frames *y*(*t*) and *y*(*t*+*dt*) of the image sequence as input for computing m.

In a first step 101 a plurality of n pyramid levels of Gaussian pyramid representations of the two frames *y(t)* and *y(t+dt)* is determined. The determination of the n pyramid levels is carried out, for example, by receiving representations of the two frames *y(t)* and *y(t+dt)* at an original scale, thereby forming the bottom layers, pyramid level value x = 1, of the two Gaussian pyramids corresponding to *y(t)* and *y(t+dt),* and recursively determining low-pass filtered downsampled pyramid levels of the two frames at corresponding successively reduced scales at corresponding pyramid level values x = 2, 3,...n.

In a second step 102 the Gaussian pyramid representations of the two frames *y(t)* and *y*(*t*+*dt*) are pyramid level-wise compared to generate arrays of pixel-by-pixel distance measures between the corresponding pyramid levels. The comparison is, for example, carried out by determining the distance arrays comprising distance values corresponding to the pixel-by-pixel distance measures between the representations of the two frames at the corresponding scales.

In a third step 103 motion values are determined from the distance measures, weighted by level values assigned to the corresponding pyramid levels. For example, motion arrays are determined, which contain motion values generated by threshold filtering, i.e. by applying a threshold T to the distance values of the corresponding distance arrays and weighting the motion values of each motion array by a level value increasing with the amount of recursions used for determining the low-pass filtered downsampled pyramid level corresponding to the motion array. The level value may, for example, correspond to x.

In a fourth step 104, recursively from top to bottom pyramid levels, weighted motion values of the corresponding motion arrays are transferred to the motion array corresponding to a next lower pyramid level if they exceed the corresponding weighted motion values of said next lower pyramid level. The recursive transfer of the weighted motion values is carried out, for example, by, recursively with decreasing level value x, upsampling the motion array corresponding to a current level value x and propagating a weighted motion value of said motion array to the motion array of a next lower level, level value x-1, if said weighted motion value exceeds the corresponding weighted motion value of the next lower level. In other words, the next lower level, level value x-1, will then contain at each position the maximum values of the weighted motion values of the current level, level value x, and of the next lower level, level value x-1, at corresponding positions. This will result in the motion array corresponding to the bottom level, level value x = 1, containing absolute motion values being characteristic for each pixel of *y*(*t*).

However, in order to provide values comparable to corresponding motion values calculated by determining vector norms of a 2-D motion vector field for *y*(*t*) and *y*(*t*+*dt*), in the embodiment shown in Fig. 1 an additional fifth step 105 is carried out which comprises determining, for at least the weighted motion values of the array corresponding to the bottom pyramid level, corresponding displacement values, for example by calculating each displacement value as 2 raised to the power of the corresponding weighted motion value.

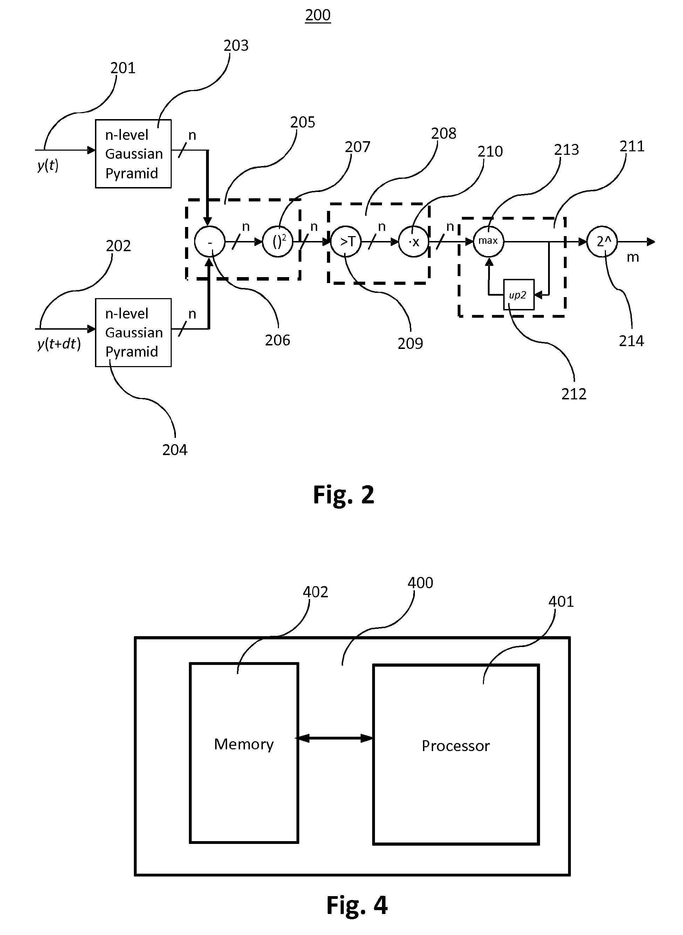

Referring to Fig. 2, a method 200 for estimating absolute motion values between two frames of a sequence of successive image frames according to another embodiment of the invention is schematically illustrated. An array m of absolute motion values is determined for a first input image frame *y*(*t*) and a second input image frame *y*(*t*+*dt*) as follows:

The first image frame *y*(*t*) taken from an image sequence at time t is received 201 and the second image frame *y*(*t*+*dt*) taken from the same image sequence but at time *t+dt* is received 202.

*y*(*t*) is converted into a first n-level Gaussian pyramid representation 203 and *y(t+dt)* is converted into a second n-level Gaussian pyramid representation 204. Both conversions are performed by recursive low-pass filtering *lpf*() and downsampling by a factor of two *dwn2*() with *y*₁(*t*) = *y(t)* and *y*₁(*t*+*dt*) = *y(t+dt)* for level value x = 1, i.e. for the bottom level of the generated pyramids, and *yₓ*(*t*) = *dwn2*(*lpf*(*y*ₓ₋₁(*t*))) and *yₓ*(*t*+*dt*) = *dwn2*(*lpf(y*ₓ₋₁(*t*+*dt*))) for level x = 2...n, i.e. for any upper level, level value x, up to the top level, level value n.

In a pyramid level-wise comparison step 205 the pixelwise Euclidian distances for each pixel of each pyramid level, level value x, are computed by first computing 206 for each pixel of each first image representation at a pyramid level, level value x, a difference to each corresponding pixel of each second image representation at the same pyramid level, also level value x, and determining 207 the respective distance values by raising the computed difference to the power of two: dₓ = (*y*ₓ(*t*)-*y*ₓ(*t*+*dt*))*.*², wherein *y*ₓ corresponds to the pyramid level of level value x of image *y*. The notation using "." indicates that the operation is performed for each calculated pixel difference value of the pyramid level.

In the step of determining weighted motion values 208 for the pyramid levels, pixelwise thresholding with threshold value T is applied 209 to the values dₓ to detect pixels in motion per scale resulting in binary masks or arrays with ones (true) indicating motion at certain space and scale: *m*ₓ = (*d*ₓ > T) In an embodiment, the pixelwise thresholding may comprise an additional morphological filtering on the resulting array *m*ₓ, e.g. dilation, closing and filling. The step of determining weighted motion values 208 further comprises weighting 210 the computed ones in mₓ by assigning level value x to the ones in *m*ₓ for each level of level value x, i.e. *m*ₓ = *m*ₓ * x

In a motion value transfer step 211 the determined motion information in *m*ₓ is recursively propagated down to the bottom level, starting from level of value x = n-1 in *m*ₓ to bottom level of value x = 1 through upsampling 212 by a factor of two up2() and selecting 213 the largest elements max(), i.e. *m*ₓ=max(mₓ, *up2* (m₍ₓ₊₁₎)). As an example, the upsampling 212 *up2* () can be performed using a nearest-neighbor method that fills up missing samples by replication.

In the shown embodiment the motion values transferred to the bottom level, level value x = 1, which now indicate the maximum levels where motion has been detected, are then used for determining 214 an array of displacement values m = 2^{(m}₁⁾

The method is particularly applicable to motion estimation within image sequences, where a certain correlation, given through temporal adjacency, between *y(t)* and *y(t+dt)* can be expected and differences can be assumed to be caused by motion. The array m therefore reflects a general measure of dissimilarity between each pixel of two images of the same size.

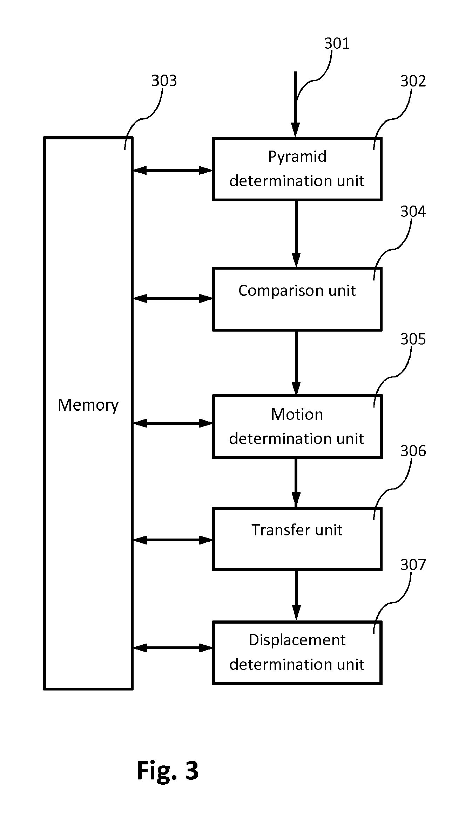

Referring now to Fig. 3 and Fig. 4, apparatuses for estimating absolute motion values between two frames of a sequence of successive image frames according to embodiments of the invention are schematically shown. The apparatus shown in Fig. 3 and the apparatus shown in Fig. 4 allow implementing the advantages and characteristics of the described method for estimating absolute motion values as part of an apparatus for estimating absolute motion values between two frames of a sequence of successive image frames.

The apparatus 300 shown in Fig. 3 has an input 301 arranged to receive frames *y(t)* and *y(t+dt)* of the sequence of successive image frames.

The apparatus 300 comprises a pyramid determination unit 302 configured to determine a plurality of pyramid levels of Gaussian pyramid representations of the two frames *y(t)* and *y(t+dt).* The pyramid determination unit may comprise a single module for determining Gaussian pyramid representations for *y(t)* and for y(*t*+*dt*) or may comprise a first module for determining the Gaussian pyramid representation for *y(t)* and a second module for determining the Gaussian pyramid representation for *y*(*t*+*dt*).

The shown apparatus 300 further comprises at least one memory 303 arranged to at least temporarily store the Gaussian pyramid representations, as well as other values calculated during the subsequent processing, such as distance and motion arrays. In another embodiment, the apparatus 300 does not contain the memory 303 but is connected or connectable to the memory by means of an interface.

A comparison unit 304 is connected to the pyramid determination unit 302 and configured to pyramid level-wise compare the Gaussian pyramid representations of the two frames to generate arrays of pixel-by-pixel distance measures, e.g. Euclidian distance measures, between corresponding pyramid levels.

A motion determination unit 305 is connected to the comparison unit 304 and is configured to pyramid level-wise determine arrays of motion values from the distance measures, weighted by level values assigned to the corresponding pyramid levels, for example by threshold filtering the distance measures and applying a weight to the threshold filtered values that corresponds to the level value of the pyramid level the motion value is associated with.

Further, the apparatus 300 comprises a transfer unit 306 connected to the motion determination unit and configured to, recursively from top to bottom pyramid levels, transfer weighted motion values of the corresponding motion array to the motion array corresponding to a next lower pyramid level if they exceed the corresponding weighted motion values of said next lower pyramid level. This may include upsampling of the arrays of weighted motion values corresponding to a certain pyramid level to the size of the corresponding array of the next lower level before comparing their weighted motion values. "Transferring" in this context refers to replacing the particular motion value of the next lower level by the corresponding one of the current pyramid level.

In the shown embodiment the determined or estimated weighted motion values are further processed by the displacement determination unit 307 to provide displacement values, i.e. suitably formatted estimated motion values.

In the embodiment shown in Fig. 3 the pyramid determination unit 302, the comparison unit 304, the motion determination unit 305, the transfer unit 306 and the displacement determination unit 307 directly communicate with each other. In another embodiment the apparatus comprises a controller unit connected at least to one or more of the pyramid determination unit 302, the comparison unit 304, the motion determination unit 305, the transfer unit 306 and the displacement determination unit 307 and controls their communication.

In the shown embodiment the memory 303 is connected to the pyramid determination unit 302, the comparison unit 304, the motion determination unit 305, the transfer unit 306 and the displacement determination unit 307. In other embodiments some all of the units are indirectly connected to the memory or the memory is provided as a plurality of separate memory devices.

The pyramid determination unit 302, the comparison unit 304, the motion determination unit 305 and the transfer unit 306, and also the displacement determination unit 307 may, for example, be provided as separate devices, jointly as at least one device or logic circuitry, or functionality carried out by a microprocessor, microcontroller or other processing device, computer or other programmable apparatus.

The apparatus 300 may, for example, be or comprise programmable logic circuitry or a processing device arranged to perform the processing, connected to or comprising at least one memory device 303.

As shown in Fig. 4, according to an embodiment of the invention an apparatus 400 for estimating absolute motion values between two frames of a sequence of successive image frames comprises a processing device 401 and a memory device 402 storing instructions that, when executed, cause the apparatus to perform steps according to one of the described methods.

For example, the processing device can be a processor adapted to perform the steps according to one of the described methods. In an embodiment said adaptation comprises that the processor is configured, i.e. for example programmed, to perform steps according to one of the described methods.

In an embodiment, the apparatus 300 or 400 is a device being part of another apparatus or system, such as, for example, a video processing framework.

As will be appreciated by one skilled in the art, aspects of the present principles can be embodied as an apparatus, a system, method or computer readable medium. Accordingly, aspects of the present principles can take the form of a hardware embodiment, a software embodiment or an embodiment combining software and hardware aspects. Furthermore, aspects of the present principles can take the form of a computer readable storage medium. Any combination of one or more computer readable storage medium(s) may be utilized.

Aspects of the present principles may, for example, at least partly be implemented in a computer program comprising code portions for performing steps of the method according to an embodiment of the invention when run on a programmable apparatus or enabling a programmable apparatus to perform functions of an apparatus or system according to an embodiment of the invention.

Further, any shown connection may be a direct or an indirect connection. Furthermore, those skilled in the art will recognize that the boundaries between logic blocks are merely illustrative and that alternative embodiments may merge logic blocks or impose an alternate decomposition of functionality upon various logic blocks.

## Claims

1. Method (100) for estimating absolute motion values between two frames of a sequence of successive image frames, **comprising**
- determining (101) a plurality of pyramid levels of Gaussian pyramid representations of the two frames;
- pyramid level-wise comparing (102) the Gaussian pyramid representations of the two frames to generate arrays of pixel-by-pixel distance measures between corresponding pyramid levels;
- pyramid level-wise determining (103) arrays of motion values from the distance measures, weighted by level values assigned to the corresponding pyramid levels; and
- recursively from top to bottom pyramid levels, transferring (104) weighted motion values of corresponding motion arrays to the motion array corresponding to a next lower pyramid level if they exceed the corresponding weighted motion values of said next lower level.

2. Method according to claim 1, **wherein** the determining (101) of a plurality of pyramid levels comprises receiving representations of the two frames at an original scale and recursively determining low-pass filtered downsampled pyramid levels of the two frames at corresponding successively reduced scales.

3. Method according to claim 2, **wherein** the pyramid level-wise comparing (102) comprises determining distance arrays comprising distance values corresponding to the pixel-by-pixel distance measures between the representations of the two frames at the corresponding scales.

4. Method according to claim 3, **wherein** the determining (103) of arrays of motion values weighted by level values assigned to the corresponding pyramid levels comprises determining the motion arrays comprising the motion values by threshold filtering the distance values of the corresponding distance arrays and,
for at least some of the motion arrays, weighting the motion values of a motion array by a pyramid level value increasing with the amount of recursions used for determining the low-pass filtered downsampled pyramid level corresponding to the motion array.

5. Method according to claim 4, **wherein** the threshold filtering comprises applying different thresholds to the distance values depending on the corresponding pyramid levels.

6. Method according to claim 4 or claim 5, **wherein** the recursive transferring (104) of the weighted motion values comprises
for said at least some of the motion arrays, recursively with decreasing pyramid level value, upsampling the motion array corresponding to a current pyramid level and propagating a weighted motion value of said motion array to the motion array of a next lower pyramid level if said weighted motion value exceeds the corresponding weighted motion value at an identical position in the motion array corresponding to the next lower pyramid level.

7. Method according to one of the preceding claims, **wherein** the determining (101) of the pyramid levels of the Gaussian pyramid representations of the two frames comprises a downsampling by a factor of two between successive pyramid levels.

8. Method according to claim 7, wherein the transferring (104) of the weighted motion values to a next lower level comprises an upsampling by a factor of two between successive arrays of the weighted motion values.

9. Method according to one of the preceding claims, **further comprising**
- determining (105), for at least the weighted motion values of the array corresponding to the bottom pyramid level, corresponding displacement values.

10. Method according to one of the preceding claims, **wherein** said generating of pixel-by-pixel distance measures comprises calculating Euclidian distances between corresponding pixels of the Gaussian pyramid representations of the two frames at corresponding pyramid levels.

11. Method according to one of the preceding claims, **wherein,** for at least some of the pyramid levels, a morphological filtering is applied to the motion values determined from the distance measures before weighting the motion values by the corresponding level values.

12. Method according to one of the preceding claims, **comprising**
- determining a single scalar value from the weighted motion values corresponding to the bottom pyramid level.

13. Method according to claim 12, **wherein** the single scalar value is an average value of the weighted motion values corresponding to the bottom pyramid level.

14. Apparatus (300) for estimating absolute motion values between two frames of a sequence of successive image frames, **comprising**
- an input (301) for receiving frames of the sequence of successive image frames;
- a pyramid determination unit (302) configured to determine a plurality of pyramid levels of Gaussian pyramid representations of the two frames;
- a comparison unit (304) configured to pyramid level-wise compare the Gaussian pyramid representations of the two frames to generate arrays of pixel-by-pixel distance measures between corresponding pyramid levels;
- a motion determination unit (305) configured to pyramid level-wise determine motion values from the distance measures, weighted by level values assigned to the corresponding pyramid levels; and
- a transfer unit (306) configured to, recursively from top to bottom pyramid levels, transfer weighted motion values of the corresponding motion array to the motion array corresponding to a next lower level if they exceed the corresponding weighted motion values of said next lower pyramid level.

15. Apparatus (400) for estimating absolute motion values between two frames of a sequence of successive image frames, **comprising**
- a processing device (401) and
- a memory device (402) storing instructions that, when executed, cause the apparatus to perform the method steps according to one of claims 1 to 13.

16. Computer readable storage medium having stored therein instructions enabling estimation of absolute motion values between two frames of a sequence of successive image frames, which, when executed by a computer, cause the computer to:
- determine (101) a plurality of pyramid levels of Gaussian pyramid representations of the two frames;
- pyramid level-wise compare (102) the Gaussian pyramid representations of the two frames to generate arrays of pixel-by-pixel distance measures between corresponding pyramid levels;
- pyramid level-wise determine (103) arrays of motion values from the distance measures, weighted by level values assigned to the corresponding pyramid levels; and
- recursively from top to bottom pyramid levels, transfer (104) weighted motion values of the corresponding motion array to the motion array corresponding to a next lower pyramid level if they exceed the corresponding weighted motion values of said next lower pyramid who 400 level.
